# EUROPÄISCHE PATENTSCHRIFT

(11) **EP 1 902 956 B1**
(45) Veröffentlichungstag und Bekanntmachung des Hinweises auf die Patenterteilung: **02.09.2009**
(21) Anmeldenummer: 06121165.2
(22) Anmeldetag: 25.09.2006
(51) Int. Cl.: B65B 3/30

(54) **Dosiervorrichtung für pulver- oder pastenförmiges Dosiergut**
Metering device for metered material in powder or paste form
Dispositif de dosage pour un matériau de dosage en forme de pulvérisateur ou de pâte

(43) Veröffentlichungstag der Anmeldung: 26.03.2008
(73) Patentinhaber: Mettler-Toledo AG, 8606 Greifensee (CH)
(72) Erfinder: Lüchinger, Paul, 8610, Uster (CH); Ehrbar, Sandra, 8605, Gutenswil (CH)

(56) Entgegenhaltungen:
- EP-A- 1 674 393
- EP-A1- 0 406 164
- US-A1- 5 479 969

## Beschreibung

Die vorliegende Erfindung bezieht sich auf eine Dosiervorrichtung für pulver- oder pastenförmiges Dosiergut.

Solche Dosiervorrichtungen finden insbesondere beim Dosieren kleiner Mengen, beispielsweise toxischer Substanzen, mit hoher Präzision in kleine Zielgefässe Verwendung. Häufig sind solche Zielgefässe auf einer Waage platziert, um die Menge der aus der Dosiervorrichtung ausgetragenen Substanz zu verwiegen, so dass sie anschliessend bestimmungsgemäss weiter verarbeitet werden kann.

Die zu dosierende Substanz befindet sich beispielsweise in einem Entnahmegefäss, welches einen Dosierkopf aufweist. Dabei ist es wünschenswert, die zu dosierende Substanz durch eine kleine Öffnung der Dosiervorrichtung auszutragen, so dass sie auch gezielt in ein Gefäss mit einem kleinen Öffnungsquerschnitt abgefüllt werden kann.

Dosiervorrichtungen für trockenes und/oder pulverförmiges Schüttgut, beispielsweise Farbstoffpulver sind bekannt und im Einsatz. So wird in der US 5 145 009 A eine Vorrichtung zum Dosieren beschrieben gemäss dem Oberbegriff des Anspruchs 1, die aus einem Entnahmegefäss mit einem verschliessbaren Auslass an seiner Unterseite besteht. Als Verschlusselement dient ein kegelförmiger, sich nach oben verjüngender zum Öffnen einer Austrittöffnung vertikal nach unten verstellbarer Ventilkörper, der in seiner Offenstellung rotiert und Mittel zum Fördern des Gutes in Richtung der Auslassöffnung besitzt. Ferner wird das Entnahmegefäss von einer Antriebswelle durchdrungen, welche an der Oberseite des Entnahmegefässes über dieses hinausragt und mit einem Antrieb gekoppelt ist. Das Entnahmegefäss ist durch einen Befestigungsflansch an seiner Unterseite mit der Dosiervorrichtung verbunden. Auf den Deckel des Entnahmegefässes wirken mehrere Druckzylinder, über deren Hub die Auslassöffnung und damit die Fördermenge des Entnahmegefässes beeinflusst werden kann. Der Ventilkörper muss bei solchen Dosiervorrichtungen möglichst spielfrei im Entnahmegefäss gelagert sein, damit eine genaue Dosierung des Dosiergutes möglich ist. Ferner erfordert eine Dosierung im Mikrogrammbereich sehr starre Verbindungen zwischen dem Antrieb und dem eingesetzten Entnahmegefäss, da in der Endphase des Dosiervorganges die Rest-Dosiermenge über kleinste Veränderungen des Drehwinkels und des linearen Hubs des Ventilkörpers dosiert wird.

Aufgrund der Anforderungen an die Befestigung des Entnahmegefässes in der Dosiervorrichtung weist die beschriebene Einrichtung den Nachteil auf, dass das Entnahmegefäss und die Schnittstellen zum Entnahmegefäss sehr genau aufeinander abgestimmt werden müssen, damit sich bei in die Dosiervorrichtung eingesetztem Entnahmegefäss die Antriebswelle mit dem Antrieb koppeln lässt. Die daraus resultierenden engen Form- und Lagetoleranzen führen zu sehr teuren Werkstücken. Ferner erfordert das Einsetzen des Entnahmegefässes je nach Ausführung des Befestigungsflansches durch die notwendigen Ausrichtungsarbeiten lange Einrichtzeiten. Diese Dosiervorrichtung ist daher sehr an die Infrastruktur des Aufstellungsortes gebunden.

Angesichts der beschränkten Einsatzmöglichkeit der oben beschriebenen Dosiervorrichtung liegt der vorliegenden Erfindung daher die Aufgabe zugrunde, eine Dosiervorrichtung zu schaffen, die eine einfache und rasche Auswechselbarkeit des Entnahmegefässes ermöglicht.

Diese Aufgabe wird dadurch gelöst, dass eine Dosiervorrichtung für pulver- oder pastenförmiges Dosiergut eine Antriebsvorrichtung und ein in die Antriebsvorrichtung einsetzbares Entnahmegefäss aufweist, wobei in Betriebsstellung an der Unterseite des Entnahmegefässes ein Dosierkopf mit einem drehantreibbaren Verschlusskörper angeordnet ist, welcher mit einer im Entnahmegefäss bewegbar gelagerten Verschlusswelle verbunden ist. Die Verschlusswelle weist ein Kupplungsteil im Bereich einer Durchtrittsstelle an der Oberseite des Entnahmegefässes auf. Das Kupplungsteil ist mit einer Antriebswelle der Antriebsvorrichtung koppelbar beziehungsweise von dieser entkoppelbar. Ferner weist das Entnahmegefäss ein erstes Formelement auf, welches mit einem an der Antriebsvorrichtung ausgebildeten ersten Gegenstück formschlüssig korrespondiert und der präzisen Positionierung des Kupplungsteils bezüglich der Antriebswelle in einer Ebene orthogonal zur Drehachse der Antriebswelle dient. Des Weiteren weist das Entnahmegefäss ein zweites Formelement auf, welches mit einem an der Antriebsvorrichtung ausgebildeten zweiten Gegenstück formschlüssig korrespondiert und in Betriebsstellung der präzisen räumlichen Positionierung des Dosierkopfs bezüglich einem, unterhalb des Dosierkopfs angeordneten Zielgefäss dient.

Durch die Verwendung zweier Verbindungsstellen wird die Positionierung zweier Schnittstellen erreicht. Die erste Schnittstelle zwischen dem Entnahmegefäss und der Antriebsvorrichtung betrifft die Kupplung der Antriebswelle mit der Verschlusswelle, die zweite Schnittstelle betrifft die Positionierung der Dosieröffnung bezogen auf die Einfüllöffnung eines Zielgefässes.

Aus dieser Anordnung ergeben sich mehrere Vorteile bezüglich dem bekannten Stand der Technik. Dadurch, dass das erste Formelement lediglich in der Ebene und das zweite Formelement räumlich positioniert sind, wird eine statisch bestimmte mechanische Verbindung zwischen dem Entnahmegefäss und der Antriebsvorrichtung geschaffen. So sind bezogen auf den Abstand zwischen dem ersten und dem zweiten Formelement keine engen Längentoleranzen nötig. Zudem führen thermisch bedingte Änderungen der Entnahmegefässhöhe nicht zu Verspannungen im System. Kleine Längenunterschiede verschiedener Entnahmegefässe können durch einen höhenverstellbaren Antrieb oder durch einen Längenausgleich im Kupplungsteil kompensiert werden.

Ebenso spielt die Rechtwinkligkeit der Einzelteile des Entnahmegefässes und die Rechtwinkligkeit der Antriebsvorrichtung keine entscheidende Rolle mehr. Das Entnahmegefäss kann eine beliebige Form aufweisen. Durch die räumlich nahe Anordnung des ersten Formelements in Bezug zum Kupplungsteil, sowie des ersten Gegenstücks in Bezug zur Antriebswelle, kann diese Schnittstelle zwischen der Antriebsvorrichtung und dem Entnahmegefäss ohne grossen Aufwand definiert werden. Dasselbe gilt für das zweite Formelement, welches in Bezug zum Dosierkopf räumlich nahe an diesem angeordnet ist und für die Einfüllöffnung des Zielgefässes, welche bezogen auf das zweite Gegenstück genau positioniert werden kann. Als Positionierungshilfe für das Zielgefäss sind beispielsweise Hilfen wie Markierungen auf dem Lastaufnehmer einer Waage oder ein in der Ausgestaltung dem Zielgefäss angepasster Lastaufnehmer denkbar.

Damit Entnahmegefässe verschiedener Längen in derselben Antriebsvorrichtung verwendet werden können, ist vorzugsweise die Distanz des ersten Gegenstücks zum zweiten Gegenstück einstellbar und dadurch dem Abstand des ersten Formelements zum zweiten Formelement eines entsprechenden Entnahmegefässes anpassbar. Die Verwendung von Entnahmegefässen unterschiedlicher Länge bietet verschiedene Vorteile. So können Entnahmegefässe gleichen Querschnitts mit unterschiedlichen Volumen hergestellt werden. Die Verwendung gleicher Querschnitte bedeutet, dass die Entnahmegefässe sich nur in ihrer Länge unterscheiden und dadurch die Peripheriegeräte und Schnittstellen zur Antriebsvorrichtung nicht geändert werden müssen. Zwar können auch kleine Dosiergut-Mengen in grossen Gefässen gelagert werden. Abgesehen vom grösseren Raumbedarf für die Logistik, die eine Verwendung grosser Gefässe mit sich bringt, sind grosse Totvolumen innerhalb des Entnahmegefässes unerwünscht. Das im Totvolumen vorhandene Medium, beispielsweise Luft, kann zu einer rascher voranschreitenden Alterung der im Entnahmegefäss gelagerten Substanz führen. Da die Entnahmegefässe auch für sehr teure Substanzen vorgesehen sind, ist es von Vorteil, wenn aus einer Reihe von Entnahmegefässen mit unterschiedlichen Volumina ausgewählt werden kann. Dadurch ergibt sich bei kleinen zu dosierenden Mengen ein geringeres Totvolumen und weniger Anhaftungsfläche im Entnahmegefäss, an welcher ein Teil des Dosiergutes anhaften kann und dadurch die tatsächlich dosierbare Menge reduziert wird.

Damit kein Dosiergut beim Dosiervorgang verschüttet wird ist es von Vorteil, wenn der Abstand zwischen dem zweiten Gegenstück und einer Einfüllöffnung des Zielgefässes, beziehungsweise bei in die Antriebsvorrichtung eingesetztem Entnahmegefäss der Abstand zwischen dem Dosierkopf und einer Einfüllöffnung des Zielgefässes einstellbar ist. Dadurch können Zielgefässe mit unterschiedlichen Gefässhöhen unter den Dosierkopf gestellt werden.

Vorzugsweise liegen die Drehachse der Verschlusswelle, die Drehachse der Antriebswelle und gegebenenfalls der Flächenmittelpunkt der Einfüllöffnung des Zielgefässes auf einer Linie, wenn das Entnahmegefäss in betriebsbereitem Zustand in die Antriebsvorrichtung eingesetzt ist.

Ein weiterer Aspekt der Erfindung sieht vor, dass die Antriebsvorrichtung mit einer Kraftmessvorrichtung, insbesondere einer Waage elektrisch und/oder mechanisch verbunden ist. Diese kann während des Dosierens zur Steuerung und Regelung des Dosiervorgangs entsprechende Steuer- und Regelgrössen erfassen. Die Steuer- und Regelgrössen, insbesondere die Veränderung der Gewichtswerte in Abhängigkeit der Zeit können in einer Steuer- und Regeleinheit verarbeitet werden und deren Ausgangswerte in geeigneter Weise auf die Antriebsvorrichtung einwirken. Die Waage ist vorzugsweise derart positioniert, dass der Flächenschwerpunkt des Lastaufnehmers, beziehungsweise der Waagschale, unterhalb des Dosierkopfs angeordnet ist, um eventuelle Eckenlastfehler zu vermeiden. Das Zielgefäss ruht während des Dosiervorganges auf dem Lastaufnehmer, wodurch eine kontinuierliche Gewichtswerterfassung und damit die Steuerung und Regelung des Dosiervorganges ermöglicht wird.

Wie vorangehend erläutert bietet die Bereitstellung unterschiedlich grosser Entnahmegefässe zwar Vorteile, kann aber zu erheblichen Mehrkosten in der Herstellung und zu Mehrkosten in der Logistik führen. In einer weiteren Ausgestaltung der Erfindung weist das Entnahmegefäss deshalb ein rohrförmiges Mittelteil auf, mit dessen unterem Ende der Dosierkopf, und mit dessen oberem Ende ein Deckel lösbar und/oder monolithisch verbunden sind. Vorzugsweise sind die Durchtrittsstelle sowie das erste Formelement am Deckel und das zweite Formelement am Dosierkopf ausgebildet. Vermittels unterschiedlicher Längen des Mittelteils kann das Volumen des Entnahmegefässes auf einfache Art und Weise den Bedürfnissen des Benutzers angepasst werden.

Das rohrförmige Mittelteil kann orthogonal zur Drehachse der Verschlusswelle einen beliebigen Querschnitt aufweisen. Ferner muss das rohrförmige Mittelteil nicht zwingend stabförmig ausgebildet sein, es kann über die Länge eine beliebige Querschnittsveränderungen aufweisen. Bei Entnahmegefässen mit über ihre Länge gleich bleibendem Querschnitt kann das Volumen des Entnahmegefässes durch die Länge des rohrförmigen Mittelteils bestimmt werden.

Da das erste Formelement das Entnahmegefäss in Bezug zur Antriebsvorrichtung nur in der Ebene orthogonal zur Drehachse der Antriebswelle positionieren muss, ist das erste Formelement vorzugsweise zylindrisch oder tonnenförmig ausgebildet. Es kann aber auch eine beliebige Form aufweisen, sofern am Formelement zumindest die Berührungsstellen mit dem ersten Gegenstück auf einem Kreis in der Ebene orthogonal zur Drehachse angeordnet sind, wobei der Mittelpunkt dieses Kreises auf der Drehachse der Verschlusswelle liegt. Idealerweise ist das Formelement rohrförmig ausgebildet und umschliesst radial zugleich die Durchtrittsstelle der Verschlusswelle und/oder das Kupplungsteil, mit welchem die Verschlusswelle verbunden ist.

Damit das Entnahmegefäss bezogen auf die Lastrichtung horizontal in die Antriebsvorrichtung eingesetzt werden kann, weist das erste Gegenstück vorzugsweise ein Gabelteil auf, dessen Schlitzbreite der Breite des ersten Formelementes entspricht und in dessen Schlitzgrund ein Anschlag für das erste Formelement ausgebildet ist.

Das eingesetzte Entnahmegefäss könnte aber durch eine solche Ausgestaltung wieder aus der Antriebsvorrichtung herausfallen, indem das erste Formelement infolge von Vibrationen aus dem ersten Gegenstück herausgerüttelt wird. Deshalb ist vorzugsweise am ersten Gegenstück mindestens eine auf das erste Formelement oder auf das Entnahmegefäss wirkende Rückhalteklinke angeordnet, welche der Sicherung des eingesetzten Entnahmegefässes gegen unbeabsichtigtes Herausfallen dient.

Um das Entnahmegefäss räumlich stabil zu positionieren ist, wie vorangehend beschrieben, ein zweites Formelement vorgesehen, welches bei eingesetztem Entnahmegefäss formschlüssig mit dem zweiten Gegenstück zusammenwirkt. Eine räumlich stabile Positionierung wird vorzugsweise dadurch erreicht, dass am zweiten Formelement mindestens eine Kugelzone ausgebildet ist, deren Kugelmittelpunkt auf der Drehachse der Verschlusswelle liegt. Das zweite Gegenstück weist einen in Lastrichtung zumindest teilweise verjüngten Durchbruch oder Einschnitt auf. In diesem sind zumindest drei Berührungspunkte ausgebildet, die in einer Ebene orthogonal zur Antriebsachse und im selben Abstand zur Antriebsachse angeordnet, bei eingesetztem Entnahmegefäss die Kugelzone berühren, wodurch das Entnahmegefäss in Bezug zur Antriebsvorrichtung beziehungsweise zum Zielgefäss räumlich positioniert wird. Bei drei Berührungspunkten sind die zwischen, vom Kugelmittelpunkt zu jeweils zwei Berührungspunkten ausgehenden VerbindungsGeraden eingeschlossenen Winkel vorzugsweise kleiner als 180°, da sonst eine stabile Positionierung nicht mehr gewährleistet ist. Die vorangehend geschilderte Problematik der Form- und Lagetoleranzen des Entnahmegefässes, insbesondere der Rechtwinkligkeit der Längsachse zur Auflage wird durch diese Kugelauflage entschärft.

Besonders einfach zu fertigen ist ein gabelförmig ausgestaltetes Gegenstück, dessen zwischen den Gabelzinken ausgebildeter Einschnitt zumindest im Einschnittgrund eine in Lastrichtung sich verjüngende Kegelflanke aufweist. Bei eingesetztem Entnahmegefäss wir dieses auf einer Berührungslinie zwischen der Kugelzone und der Kegelflanke positioniert und abgestützt, ungeachtet der vorhandenen Winkelfehler zwischen der Antriebsvorrichtung und dem Entnahmegefäss oder der Geradheit des Entnahmegefässes.

Idealerweise ist das Entnahmegefäss oder zumindest das erste Formelement und das zweite Formelement bezüglich der Drehachse der Verschlusswelle rotationssymmetrisch ausgestaltet. Dadurch ist das Entnahmegefäss bezüglich seiner Drehachse beim Einsetzen in die Antriebsvorrichtung lageunabhängig. Das Entnahmegefäss kann nach dem Einsetzen in die Antriebsvorrichtung um die Drehachse frei gedreht werden. Dies hat den Vorteil, dass bei formschlüssigen Kupplungen das Entnahmegefäss bezüglich der Drehachse der Verschlusswelle beispielsweise von Hand in die richtige Position gedreht werden kann, bis die Kupplungsteile zusammengefügt werden können.

Bei einem in der Antriebsvorrichtung um die Drehachse frei drehbaren Entnahmegefäss sollte zudem eine Verdrehsicherung angeordnet sein, die der Aufnahme von Drehmomenten dient, welche von der Antriebsvorrichtung oder von der Umgebung auf das Entnahmegefäss einwirken.

Als Verdrehsicherung kann eine einfache Nocke dienen, welche in eine Nut eingreift. Sofern diese Nocke über ein Federelement mit der Antriebsvorrichtung verbunden ist, kann beispielsweise ein rotationssymmetrisch ausgestaltetes Entnahmegefäss zuerst in die Antriebsvorrichtung eingesetzt und anschliessend um die Drehachse der Verschlusswelle gedreht werden, bis die Nocke in die am Entnahmegefäss ausgebildete Nut eingreift. Selbstverständlich können die Nut auch an der Antriebsvorrichtung und die Nocke am Entnahmegefäss ausgebildet sein.

Ferner kann die Verdrehsicherung auch der Überlastsicherung des Antriebs dienen, sofern diese ein Federelement aufweist. Über dessen Federkraft beziehungsweise Vorspannkraft kann das maximale Drehmoment eingestellt werden.

Da die erfindungsgemässe Dosiervorrichtung für den raschen Austausch der Entnahmegefässe vorgesehen ist, weisen die Entnahmegefässe vorzugsweise eine Identifikationsmarkierung oder einen Identifikationssender auf, beispielsweise ein Barcode, Matrixcode oder ein RFID- Tag. Die Identifikationslesevorrichtung kann an geeigneter Stelle in der Antriebsvorrichtung angeordnet sein.

Damit die Identifikation des Entnahmegefässes oder gegebenenfalls sogar das Einspeichern von Daten in den Identifikationssender oder das Aufdrucken spezifischer Daten am Entnahmegefäss störungsfrei erfolgen kann, sollte die Identifikationsmarkierung beziehungsweise der Identifikationssender bezogen auf die Identifikationslesevorrichtung ausgerichtet sein. Eine Positionierung kann über die Verdrehsicherung erfolgen, wenn diese mindestens eine Einrastposition aufweist. Durch diese Positionierung ist die Ablesestelle genau definiert. Die gespeicherten oder aufgedruckten Daten können beispielsweise die Länge des entsprechenden Entnahmegefässes beinhalten. Diese könnten durch die Antriebsvorrichtung abgerufen werden und der automatischen Einstellung des Abstandes zwischen dem ersten Gegenstück und den zweiten Gegenstück dienen.

Sinnvollerweise sind die vorangehend beschriebenen Formelemente und Gegenstücke derart ausgestaltet, dass ein leichtes Anheben des in der Antriebsvorrichtung eingesetzten Entnahmegefässes genügt, um dieses aus der Antriebsvorrichtung zu entfernen. Damit während des Dosiervorganges das Entnahmegefäss nicht aus der Antriebsvorrichtung springt und Störungen verursacht, kann die Antriebsvorrichtung eine Verriegelungsvorrichtung aufweisen, die zumindest während der Betriebsphasen der Sicherung des in der Dosiervorrichtung eingesetzten Entnahmegefässes gegen axiale Verschiebungen bezogen auf die Drehachse der Verschlusswelle dient.

In einer weiteren Ausgestaltung der erfindungsgemässen Dosiervorrichtung kann diese mit einer Beschickungsvorrichtung für Entnahmegefässe ergänzt werden. Um automatisierte Abläufe zu ermöglichen, müssen zumindest die Entnahmegefässe geeignete Mittel aufweisen, an denen die bewegten Elemente der Beschickungsvorrichtung, beispielsweise ein Roboterarm angreifen kann. Als Mittel kann das Entnahmegefäss mindestens einen, in einer Ebene orthogonal zur Drehachse der Verschlusswelle zumindest teilweise umlaufenden Bund aufweisen, an dessen Randbereich mindestens ein in Lastrichtung weisender erster Vorsprung ausgebildet ist.

Vorzugsweise sind der mindestens eine Bund und der mindestens eine erste Vorsprung konzentrisch zur Verschlusswelle ausgebildet. Durch die rotationssymmetrische Ausgestaltung ist das Entnahmegefässes bezüglich der Drehachse der Verschlusswelle lageunabhängig und vereinfacht dadurch die automatisierten Abläufe erheblich.

Ferner weist die Beschickungsvorrichtung mindestens eine in ihrer Ausgestaltung mit dem Bund und dem mindestens einen ersten Vorsprung formschlüssig korrespondierende Aufnahme auf. An der Aufnahme sind mindestens eine gabelförmige Auflage und mindestens eine Aussparung und/oder ein zweiter Vorsprung ausgebildet. Die mindestens eine gabelförmige Auflage dient bei in die Aufnahme eingesetztem Entnahmegefäss dem mindestens einen Bund zumindest teilweise als Auflage. Damit das Entnahmegefäss während der Handhabung nicht aus der gabelförmigen Aufnahme fällt, umschliesst die mindestens eine Aussparung teilweise oder vollständig den mindestens einen ersten Vorsprung oder der zweite Vorsprung greift am ersten Vorsprung an. Durch eine lineare Verschiebung in Richtung der Drehachse der Verschlusswelle wird das Entnahmegefäss in der Aufnahme eingehängt beziehungsweise aus der Aufnahme herausgehoben. Eine solcherart ausgestaltete Aufnahme ermöglicht ein einfaches, automatisiertes Einsetzen und Entfernen des Entnahmegefässes aus der Antriebsvorrichtung.

Das Mischen mehrerer Substanzen erfordert in der Regel den Einsatz mehrerer Entnahmegefässe. Solange diese nicht in der Antriebsvorrichtung eingesetzt sind, können sie nahe der Dosiervorrichtung in einem Mehrfachhalter gelagert werden. Dieser kann in der Beschickungsvorrichtung integriert oder von der Beschickungsvorrichtung getrennt angeordnet sein.

Vorzugsweise ist die Beschickungsvorrichtung mit der Antriebsvorrichtung verbunden und in der Beschickungsvorrichtung und/oder in der Antriebsvorrichtung mindestens eine Speichereinheit angeordnet. In dieser Speichereinheit kann die Position der im Mehrfachhalter aufbewahrten Entnahmegefässe und deren spezifische Daten wie beispielsweise die Länge des Entnahmegefässes abgespeichert werden.

Einzelheiten der erfindungsgemässen Dosiervorrichtung ergeben sich anhand der Beschreibung der in den Zeichnungen dargestellten Ausführungsbeispiele. Es zeigen:
- Figur 1: eine erfindungsgemässe Dosiervorrichtung mit einer Antriebsvorrichtung und zwei Entnahmegefässen verschiedener Länge, wobei die Entnahmegefässe von der Antriebsvorrichtung getrennt dargestellt sind;
- Figur 2: die Dosiervorrichtung aus Figur 1, mit einem in die Antriebsvorrichtung einsetzten Entnahmegefäss, sowie eine Beschickungsvorrichtung und einen Mehrfachhalter, in welchem ein zweites Entnahmegefäss stehend gelagert ist;
- Figur 3: das Entnahmegefäss im Teilschnitt sowie einen Teil des ersten Gegenstücks, des zweiten Gegenstücks und der gabelförmigen Aufnahme der Beschickungsvorrichtung im Schnitt;

Figur 4 die weitere Ausgestaltung eines zweiten Gegenstücks.

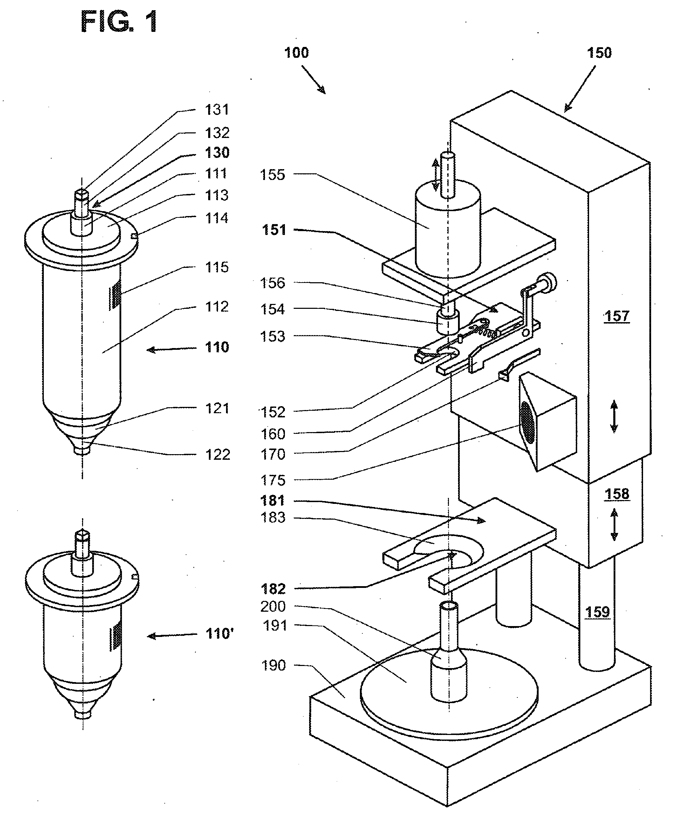

Die Figur 1 zeigt eine Dosiervorrichtung 100, die eine Antriebsvorrichtung 150 aufweist, in welche ein Entnahmegefäss 110 eingesetzt und aus dieser wieder entfernt werden kann. Die Antriebsvorrichtung 150 weist ein Oberteil 157 und ein Unterteil 158 auf, die im Wesentlichen in Lastrichtung linear von- und gegeneinander verschiebbar sind. Dies ermöglicht die Verwendung von Entnahmegefässen 110, 110' unterschiedlicher Länge. Um einen einfachen Wechsel des Entnahmegefässes 110 und einen sicheren und genauen Dosierbetrieb zu gewährleisten, muss das Entnahmegefäss 110 beziehungsweise die Antriebsvorrichtung 150 geeignete mechanische, gegebenenfalls mechanische und elektrische Verbindungselemente aufweisen, welche miteinander formschlüssig korrespondieren. Das Entnahmegefäss 110 weist mindestens ein erstes Formelement 111 auf, welches durch ein am Oberteil 157 ausgebildetes oder mit diesem verbundenes erstes Gegenstück 151 in einer Ebene orthogonal zur Lastrichtung positioniert wird. Ferner weist das Entnahmegefäss 110 mindestens ein zweites Formelement 121 auf, welches durch ein am Unterteil 158 ausgebildetes oder mit diesem verbundenes zweites Gegenstück 181 in Bezug auf die Antriebsvorrichtung 150 räumlich positioniert wird. Dadurch wird das Entnahmegefäss 110 beziehungsweise dessen Dosieröffnung in Bezug auf ein Zielgefäss 200 genau ausgerichtet.

Das Entnahmegefäss 110 in Figur 1 weist eine zylindrische Grundform auf. Grundsätzlich sind aber auch andere Entnahmegefäss- Formen mit beispielsweise quadratischem, sechs- oder achteckigem Aussen- und Innenquerschnitt möglich. Das in die Antriebsvorrichtung 150 eingesetzte Entnahmegefäss 110 weist in Betriebsstellung mit seiner Längsachse in Lastrichtung. Am unteren Ende des Entnahmegefässes 110 ist ein Dosierkopf 122 angeordnet. Im Dosierkopf 122 ist ein nicht dargestellter, drehantreibbarer Verschlusskörper integriert, welcher mit einer im Entnahmegefäss 110 bewegbar gelagerten Verschlusswelle 132 verbunden ist. Der Körper des Entnahmegefässes 110 ist als rohrförmiger Mittelteil 112 ausgebildet und wird an der Oberseite durch einen Deckel 113 abgeschlossen. Der Deckel 113 und das rohrförmige Mittelteil 112 können aber auch monolithisch miteinander verbunden sein. Im Deckel 113 befindet sich eine Durchtrittsstelle 130, in welcher das dem Verschlusskörper entgegen gesetzte Ende der Verschlusswelle 132 drehbar gelagert ist und mit diesem Ende aus dem Entnahmegefäss 110 ragt. Dieses Ende der Verschlusswelle 132 weist ein Kupplungsteil 131 auf, welches in diesem Ausführungsbeispiel als Vierkantstück ausgebildet ist und zumindest während des Dosiervorganges über eine Kupplungshülse 154 mit dem in der Antriebsvorrichtung 150 integrierten Antrieb 155 verbunden ist. Zum Zwecke des Koppelns sollte der Antrieb 155 oder zumindest eine mit dem Antrieb verbundene Antriebswelle 156 vorzugsweise in Lastrichtung linear verschiebbar sein. Selbstverständlich können an Stelle dieses Vierkantstücks alle bekannten form- oder kraftschlüssig wirkenden Kupplungen verwendet werden, deren Kupplungshälften auf einfache Weise trennbar sind. Bei der Wahl der Kupplung ist jedoch darauf zu achten, dass zwischen den Kupplungshälften während des normalen Dosierbetriebes keinen Schlupf entsteht, da dies je nach Dosierverfahren die Präzision der Dosiervorrichtung 100 beeinträchtigen kann.

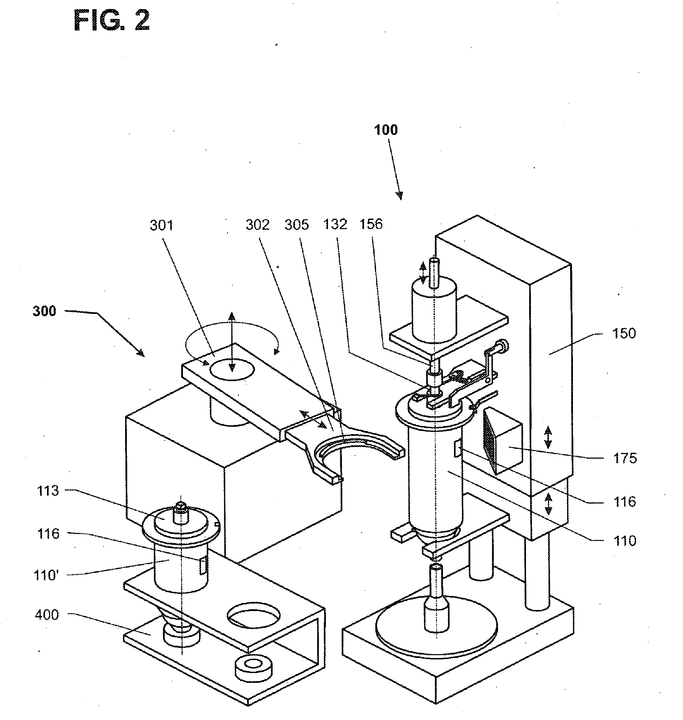

Auf einfache Weise lässt sich auch die mechanische Verbindung zwischen dem Entnahmegefäss 110 und der Antriebsvorrichtung 150 realisieren, indem das erste Formelement 111 zylindrisch, kugelförmig oder tonnenförmig ausgebildet ist und in ein gabelförmig ausgebildetes erstes Gegenstück 151 eingreift. Um die Genauigkeit der Dosiervorrichtung 100 nicht zu beeinträchtigen, sollte die formschlüssig wirkende Verbindung in der Ebene orthogonal zur Lastrichtung möglichst spielfrei sein. Vorzugsweise entspricht die Schlitzbreite des gabelförmig ausgebildeten ersten Gegenstücks 151 dem Durchmesser des ersten Formelementes 111. Ferner wirkt das Schlitzende 152 als Anschlag für das Formelement 111 und definiert den Abstand des eingesetzten Entnahmegefässes 110 zum Oberteil 157 beziehungsweise zum Unterteil 158. Damit das erste Formelement 111 nicht aus dem ersten Gegenstück 151 schlüpft, presst eine federbeaufschlagte Rückhalteklinke 153 wie in Figur 2 dargestellt, das Formelement 111 gegen das Schlitzende 152. Zum Entfernen des Entnahmegefässes 110 aus der Antriebsvorrichtung 150 kann die Rückhalteklinke 153 elektromechanisch oder pneumatisch geöffnet werden. Wie in Figur 1 und Figur 2 dargestellt, kann durch entsprechende Gestaltung der Klinkennase, beim Entfernen des Entnahmegefässes 110 die Rückhalteklinke 135 mit erheblichem Kraftaufwand durch das Formelement 111 beiseite geschoben werden. Die federbeaufschlagte Rückhalteklinke 153 und/oder das Schlitzende 152 kann zusätzlich elektrische Kontakte aufweisen, welche bei eingesetztem Entnahmegefäss 110 am ersten Formelement 111 oder am Entnahmegefäss 110 angeordnete Gegenkontakte berühren und dadurch eine elektrische Verbindung zwischen dem Entnahmegefäss 110 und der Antriebsvorrichtung 150 herstellen. Eine solche elektrische Verbindung kann zu Erdungszwecken des Entnahmegefässes, oder wie nachstehend beschrieben, auch zu Identifikationszwecken verwendet werden.

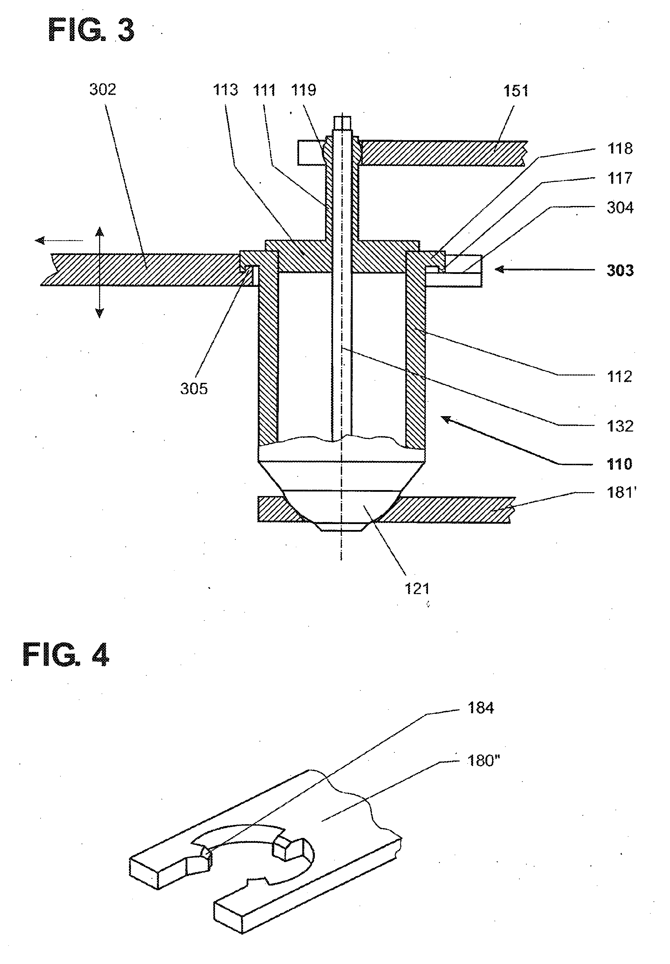

Das zweite Gegenstück 181 positioniert das Entnahmegefäss 110 im Zusammenwirken mit dem zweiten Formelement 121 nicht nur in der Ebene orthogonal zur Lastrichtung, sondern stützt das Entnahmegefäss 110 auch in Lastrichtung eindeutig ab. Das zweite Formelement 121 weist eine Kugelzone auf, deren Kugelmittelpunkt auf der Längsachse des Entnahmegefässes 110 liegt. Das zweite Gegenstück 181 ist ebenfalls gabelförmig ausgebildet. Der Schlitzgrund182 weist eine sich in Lastrichtung verjüngende, kegelförmig ausgebildete Flanke 183 oder Fase auf. In dieser Flanke 183 liegt bei eingesetztem Entnahmegefäss 110 die Kugelzone 121 auf und bildet, mit Ausnahme im Bereich des Schlitzes, eine ringförmige Auflagestelle. Je nach Ausbildung des Dosierkopfs 122 und der Positionierung des zweiten Formelements 121 am Dosierkopf 122 kann beim zweiten Gegenstück 181 auf eine gabelförmige Ausbildung verzichtet werden. Das zweite Gegenstück 181' kann auch eine zylindrische oder wie in Figur 3 im Schnitt dargestellt, eine sich in Lastrichtung verjüngende Durchbrechung aufweisen. Eine dritte Variante ist in Figur 4 schematisch dargestellt und zeigt das zweite Gegenstück 181 ", durch dessen Ausgestaltung mittels Nocken 184 eine Dreipunktauflage für die Kugelzone des Formelements 121 gebildet wird.

Die Antriebsvorrichtung 150 weist ferner eine Verriegelungsvorrichtung 160 auf, welche wie in Figur 2 dargestellt, bei eingesetztem Entnahmegefäss 110 auf den Deckel 113 einwirkt und das Entnahmegefäss 110 gegen Verschiebung entgegen der Lastrichtung sichert. Auch diese kann, wie bereits bei der Rückhalteklinke 153 beschrieben, zusätzlich eine elektrische Verbindung zum Entnahmegefäss aufweisen und mechanisch, elektromechanisch oder pneumatisch betätigt werden. Die elektrischen Verbindungen können beispielsweise als Schalter zur Betätigung der Rückhalteklinke 153 oder deren Signale als Quittierung an die Steuerung, dass wirklich ein Entnahmegefäss eingesetzt ist, verwendet werden. Des Weiteren ist am Deckel eine Aussparung 114 ausgebildet. In diese Aussparung 114 greift bei eingesetztem Entnahmegefäss 110 eine Verdrehsicherung 170 ein, um das vom Antrieb 155 auf das Entnahmegefäss 110 einwirkende Drehmoment aufzunehmen und abzustützen. Die Verdrehsicherung 170 ist in diesem Ausführungsbeispiel als einfache Federzunge ausgebildet, so dass beim Einsetzen des Entnahmegefässes 110 die Position der Aussparung 114 bezüglich der Verdrehsicherung 170 nicht beachtet werden muss. Sobald der Antrieb über eine Antriebswelle 156 mit der Verschlusswelle 132 gekoppelt ist und ein Drehmoment auf die Verschlusswelle 132 einwirkt, wird das Entnahmegefäss 110 solange mitgedreht, bis die Verdrehsicherung 170 einrastet. Selbstverständlich kann das Entnahmegefäss 110 auch von Hand in die richtige Position gedreht werden. Als Verdrehsicherung 170 sind nicht nur Federzungen, sonder auch Bolzen, Stifte, Klemmpratzen und dergleichen verwendbar. Auch die Verdrehsicherung 170 kann, wie bereits bei der Rückhalteklinke 153 beschrieben, zusätzlich eine elektrische Verbindung zum Entnahmegefäss 110 aufweisen. Zudem wirkt die dargestellte Verdrehsicherung 170 gleichzeitig als Überlastsicherung für den Antrieb, falls die Verschlusswelle 132 im Entnahmegefäss 110, 110' blockiert. Selbstverständlich kann die Aussparung 114 an einer beliebigen Stelle des Entnahmegefässes 110 ausgebildet und die Verdrehsicherung 170 an einer entsprechend dazu passenden Position an der Antriebsvorrichtung 150 angeordnet sein.

Der Vorteil der dargestellten Ausführung liegt darin, dass das Entnahmegefäss 110 bezüglich der Antriebsvorrichtung 150 eine klar definierte Position einnimmt und gegen weiteres Verdrehen gesichert ist. Dies unterstützt die automatische Identifizierung des Entnahmegefässes 110, da eine am Entnahmegefäss 110 angebrachte Identifikationsmarkierung 115, beispielsweise ein Barcode oder Matrixcode, bezüglich einer Identifikationslesevorrichtung 175, in Figur 1 eine Kamera, genau positioniert ist.

Um zur Steuerung und Regelung des Dosiervorgangs entsprechende Steuer- und Regelgrössen zu erfassen, ist die Antriebsvorrichtung 150 mechanisch über höhenverstellbare Füsse 159 und elektrisch über eine nicht dargestellte Verbindung vorzugsweise mit einer Kraftmessvorrichtung 190 verbunden, auf deren Lastaufnehmer 191 das Zielgefäss 200 aufgelegt wird. Die Einstellbarkeit der Füsse 159 ermöglicht die Verwendung verschieden ausgestalteter Zielgefässe 200 mit unterschiedlichen Gefässhöhen.

Die Figur 2 zeigt die Dosiervorrichtung 100 aus Figur 1, eine Beschickungsvorrichtung 300 für Entnahmegefässe 110, 110' und einen Mehrfachhalter 400. Der Mehrfachhalter 400 kann in die Beschickungsvorrichtung 300 integriert, oder auch wie in Figur 2 dargestellt, von dieser getrennt angeordnet sein. In die Antriebsvorrichtung 150 der Dosiervorrichtung 100 ist ein Entnahmegefäss 110 eingesetzt. Die Antriebswelle 156 ist mit der Verschlusswelle 132 gekoppelt. Zwecks Kopplung muss die Antriebswelle 156 in Lastrichtung und zur Entkopplung entgegen der Lastrichtung verschiebbar sein.

Anstelle der in Figur 1 dargestellten Identifikationsmarkierung 115 weist das Entnahmegefäss 110 einen Identifikationssender 116, beispielsweise einen RFID- Tag oder einen Kommunikations- und Speicherchip auf. Dem entsprechend ist die Identifikationslesevorrichtung 175 keine Kamera sondern ein mit dem Identifikationssender 116 kommunizierender Empfänger.

Die schematisch dargestellte Beschickungsvorrichtung 300 weist einen in der Ebene orthogonal zur Lastrichtung verschwenkbaren Beschickungsarm 301 auf. Zudem ist der Beschickungsarm 301 in Lastrichtung und entgegen der Lastrichtung linear verschiebbar. Dessen gabelförmig ausgebildete Aufnahme 302 kann in Richtung der Längsachse des Beschickungsarms 301 ein und ausgefahren werden. Mit Hilfe dieses Beschickungsarms 301 und dessen Aufnahme 302, die am Deckel 113 angreift, kann ein Entnahmegefäss 110, 110' automatisiert in die Antriebsvorrichtung 150 eingebracht beziehungsweise daraus entfernt werden. Selbstverständlich sind auch die in der Industrie vielfach verwendeten Industrieroboter oder so genannte Zuführ-Karussells an Stelle der dargestellten Beschickungsvorrichtung 300 einsetzbar.

Im beigestellten Mehrfachhalter 400 können die nicht verwendeten Entnahmegefässe 110' gelagert werden. Durch die in Figur 1 und Figur 2 dargestellten, rotationssymmetrische Ausbildung der Entnahmegefässe 110, 110', sind diese auch in der Ablage bezüglich ihrer Symmetrieachse lageunabhängig.

Figur 3 zeigt das in die Antriebsvorrichtung eingesetzte Entnahmegefäss 110 im Teilschnitt. Von der Antriebsvorrichtung ist nur ein Teil des ersten Gegenstücks 151 und ein Teil des vorangehend zweiten Gegenstücks 181' und von der Beschickungsvorrichtung nur die gabelförmige Aufnahme 302 im Schnitt dargestellt. Am rohrförmigen Mittelteil 112 oder am Deckel 113 des Entnahmegefässes 110 ist ein umlaufender Bund 118 ausgebildet, an dessen in Lastrichtung weisender Fläche ein zur Verschlusswelle 132 konzentrischer erster Vorsprung 117 angeordnet ist. Im Schlitz 303 der Aufnahme 301 ist eine abgesetzte Auflage 304 ausgebildet, welche im Bereich des Schlitzgrundes einen entgegen der Lastrichtung weisenden zweiten Vorsprung 305 aufweist. Dieser zweite Vorsprung 305, dessen Ausbildung auch gut in Figur 2 einsehbar ist, greift bei durch die Beschickungsvorrichtung aufgenommenem Entnahmegefäss 110 hinter den ersten Vorsprung 117 ein. Dadurch wird verhindert, dass während des Beschickungsvorganges das Entnahmegefäss 110 aus der Aufnahme 302 fällt. Zudem muss die Kraft zumindest der Rückhalteklinke der Antriebsvorrichtung beim Entfernen des Entnahmegefässes 110 überwunden werden. Das erste Formelement 111 ist in Figur 3 im Wesentlichen zylindrisch ausgestaltet und weist am dem Deckel 113 entgegengesetzten Ende eine Kugelzone 119 auf. Damit das Entnahmegefäss 110 aus dem zweiten Gegenstück 118' entgegen der Lastrichtung herausgehoben und anschliessend orthogonal zur Lastrichtung aus der Antriebsvorrichtung entfernt werden kann, muss das erste Formelement 111 dem dazu notwendigen Hub entsprechend stabförmig ausgebildet sowie im ersten Gegenstück 151 entgegen der Lastrichtung und in dessen Schlitzrichtung verschiebbar sein. Sowohl im Bereich des ersten Gegenstücks 151 und der Kugelzone 119 als auch im Bereich des zweiten Formelements 121 und dem zweiten Gegenstück 181', wird durch die beschriebene Ausgestaltung das Entnahmegefäss 110 jeweils durch eine Berührungslinie positioniert. Ein blockieren des Entnahmegefässes in der Antriebsvorrichtung infolge Verkantens wird dadurch ausgeschlossen.

### Bezugszeichenliste

- 100: Dosiervorrichtung
- 110', 110: Entnahmegefäss
- 111: erstes Formelement
- 112: rohrförmiges Mittelteil
- 113: Deckel
- 114: Aussparung
- 115: Identifikationsmarkierung
- 116: Identifikationssender
- 117: erster Vorsprung
- 118: umlaufender Bund
- 119: Kugelzone
- 200: Zielgefäss
- 121: zweites Formelement
- 122: Dosierkopf
- 130: Durchtrittsstelle
- 131: Kupplungsteil
- 132: Verschlusswelle
- 150: Antriebsvorrichtung
- 151: erstes Formelement
- 152: Schlitzende
- 153: Rückhalteklinke
- 154: Kupplungshülse
- 155: Antrieb
- 156: Antriebswelle
- 177: Oberteil
- 158: Unterteil
- 159: Fuss
- 160: Verriegelungsvorrichtung
- 170: Verdrehsicherung
- 175: Identifikationslesevorrichtung
- 181 181: zweites Gegenstück
- 182: Schlitzgrund
- 183: Flanke
- 184: Nocken
- 190: Kraftmessvorrichtung
- 191: Lastaufnehmer
- 300: Beschickungsvorrichtung
- 301: Beschickungsarm
- 302: Aufnahme
- 303: Schlitz
- 304: Auflage
- 305: zweiter Vorsprung
- 400: Mehrfachhalter

## Patentansprüche

1. Dosiervorrichtung (100) für pulver- oder pastenförmiges Dosiergut, mit einer Antriebsvorrichtung (150) und einem in die Antriebsvorrichtung (150) einsetzbaren Entnahmegefäss (110, 110'), wobei in Betriebsstellung an der Unterseite des Entnahmegefässes (110, 110') ein Dosierkopf (122) mit einem drehantreibbaren Verschlusskörper angeordnet ist, welcher mit einer im Entnahmegefäss (110, 110') bewegbar gelagerten Verschlusswelle (132) verbunden ist und welche Verschlusswelle (132) im Bereich einer Durchtrittsstelle (130) an der Oberseite des Entnahmegefässes (110, 110') ein Kupplungsteil (131) aufweist mit dem eine Antriebswelle (156) der Antriebsvorrichtung (150) koppelbar beziehungsweise entkoppelbar ist, **dadurch gekennzeichnet, dass** das Entnahmegefäss (110, 110') ein erstes Formelement (111) aufweist, welches mit einem an der Antriebsvorrichtung (150) ausgebildeten ersten Gegenstück (151) formschlüssig korrespondiert und der präzisen Positionierung des Kupplungsteils (131) bezüglich der Antriebswelle (156) in einer Ebene orthogonal zur Drehachse der Antriebswelle (156) dient, und dass das Entnahmegefäss (110, 110') ein zweites Formelement (121) aufweist, welches mit einem an der Antriebsvorrichtung (150) ausgebildeten zweiten Gegenstück (181, 181') formschlüssig korrespondiert und in Betriebsstellung der präzisen räumlichen Positionierung des Dosierkopfs (122) bezüglich eines, unterhalb des Dosierkopfs (122) angeordneten Zielgefässes (200) dient.

2. Dosiervorrichtung (100) nach Anspruch 1, **dadurch gekennzeichnet, dass** die Distanz des ersten Gegenstücks (151) zum zweiten Gegenstück (181, 181') einstellbar und dem Abstand des ersten Formelements (111) zum zweiten Formelement (121) anpassbar ist.

3. Dosiervorrichtung (100) nach Anspruch 1 oder 2, **dadurch gekennzeichnet, dass** der Abstand zwischen dem zweiten Gegenstück (181) und einer Einfüllöffnung des Zielgefässes (200), beziehungsweise bei in die Antriebsvorrichtung (150) eingesetztem Entnahmegefäss (110, 110') der Abstand zwischen dem Dosierkopf und einer Einfüllöffnung des Zielgefässes (200) einstellbar ist.

4. Dosiervorrichtung (100) nach einem der Ansprüche 1 bis 3, **dadurch gekennzeichnet, dass** mit der Antriebsvorrichtung (150) eine Kraftmessvorrichtung (190), insbesondere eine Waage elektrisch und/oder mechanisch verbunden ist.

5. Dosiervorrichtung (100) nach einem der Ansprüche 1 bis 4, **dadurch gekennzeichnet, dass** das Entnahmegefäss (110, 110') ein rohrförmiges Mittelteil (112) aufweist, mit dessen unterem Ende der Dosierkopf (122), und mit dessen oberem Ende ein Deckel (113) lösbar und/oder monolithisch verbunden sind, wobei die Durchtrittsstelle (130) sowie das erste Formelement (111) am Deckel (113) und das zweite Formelement (121) am Dosierkopf (122) ausgebildet ist.

6. Dosiervorrichtung (100) nach Anspruch 5, **dadurch gekennzeichnet, dass** das rohrförmige Mittelteil (112) orthogonal zur Drehachse der Verschlusswelle (132) einen beliebigen Querschnitt aufweist.

7. Dosiervorrichtung (100) nach einem der Ansprüche 1 bis 6, **dadurch gekennzeichnet, dass** das Volumen von Entnahmegefässen (110, 110') mit über ihre Länge gleich bleibendem Querschnitt durch die Länge des rohrförmigen Mittelteils (112) bestimmt ist.

8. Dosiervorrichtung (100) nach einem der Ansprüche 1 bis 7, **dadurch gekennzeichnet, dass** das erste Formelement (111) rohrförmig ausgebildet ist und die Durchtrittsstelle (130) radial umschliesst, wobei die Aussenfläche des Formelements (111) zylindrisch und/oder tonnenförmig ausgebildet ist oder eine beliebige Form aufweist, wobei am Formelement (111) zumindest die Berührungsstellen mit dem ersten Gegenstück (151) auf einem Kreis in der Ebene orthogonal zur Drehachse der Verschlusswelle (132) angeordnet sind und der Mittelpunkt dieses Kreises auf der Drehachse der Verschlusswelle (132) liegt.

9. Dosiervorrichtung (100) nach einem der Ansprüche 1 bis 8, **dadurch gekennzeichnet, dass** das erste Gegenstück (151) ein Gabelteil aufweist, dessen Schlitzbreite der Breite des ersten Formelementes (111) entspricht und in dessen Schlitzgrund (152) ein Anschlag für das erste Formelement (111) ausgebildet ist.

10. Dosiervorrichtung (100) nach einem der Ansprüche 1 bis 9, **dadurch gekennzeichnet, dass** am ersten Gegenstück (151) öder an der Antriebsvorrichtung (150) mindestens eine auf das erste Formelement (111) oder auf das Entnahmegefäss (110, 110') wirkende Rückhalteklinke (153) angeordnet ist.

11. Dosiervorrichtung (100) nach einem der Ansprüche 1 bis 10, **dadurch gekennzeichnet, dass** am zweiten Formelement (121) mindestens eine Kugelzone ausgebildet ist, deren Kugelmittelpunkt auf der Drehachse der Verschlusswelle (132) liegt, und dass das zweite Gegenstück (181, 181') einen in Lastrichtung verjüngten Durchbruch oder Einschnitt aufweist, in welchem zumindest drei Berührungspunkte oder Berührungsflächen ausgebildet sind, die bei eingesetztem Entnahmegefäss (110, 110') die Kugelzone berühren, wodurch das Entnahmegefäss (110, 110') bezüglich der Antriebsvorrichtung (150) beziehungsweise dem Zielgefäss (200) räumlich positionierbar ist.

12. Dosiervorrichtung (100) nach einem der Ansprüche 1 bis 11, **dadurch gekennzeichnet, dass** das erste Formelement (111) und das zweite Formelement (121) und /oder das Entnahmegefäss (110, 110') bezüglich der Drehachse der Verschlusswelle (132) im Wesentlichen rotationssymmetrisch ausgestaltet ist.

13. Dosiervorrichtung (100) nach einem der Ansprüche 1 bis 12, **dadurch gekennzeichnet, dass** das in die Antriebsvorrichtung (150) eingesetzte Entnahmegefäss (110, 110') bezüglich der Drehachse der Verschlusswelle (132) frei drehbar ist.

14. Dosiervorrichtung (100) nach einem der Ansprüche 1 bis 13, **dadurch gekennzeichnet, dass** zwischen der Antriebsvorrichtung (150) und dem Entnahmegefäss (110, 110') eine Verdrehsicherung (170) mit mindestens einer definierten Einrastposition angeordnet ist.

15. Dosiervorrichtung (100) nach Anspruch 14, **dadurch gekennzeichnet, dass** die Verdrehsicherung (170) ein der Überlastsicherung des Antriebs (155) dienendes Federelement aufweist.

16. Dosiervorrichtung (100) nach Anspruch 15, **dadurch gekennzeichnet, dass** das Entnahmegefäss (110, 110') eine Identifikationsmarkierung (115) oder ein Identifikationssender (116), beispielsweise einen RFID- Tag aufweist.

17. Dosiervorrichtung (100) nach Anspruch 16, **dadurch gekennzeichnet, dass** mindestens eine Einrastposition der Verdrehsicherung (170) bezüglich der Positionen der Identifikationsmarkierung (115) oder dem Identifikationssender (116) und bezüglich der Position einer vom Entnahmegefäss (110, 110') getrennt angeordneten Identifikationslesevorrichtung (175) ausgerichtet ist.

18. Dosiervorrichtung (100) nach einem der Ansprüche 1 bis 17, **dadurch gekennzeichnet, dass** die Antriebsvorrichtung (150) eine, der Sicherung des in der Dosiervorrichtung (100) eingesetzten Entnahmegefässes (110, 110') gegen axiale Verschiebungen bezogen auf die Drehachse der Verschlusswelle (132) dienende Verriegelungsvorrichtung (160) aufweist.

19. Dosiervorrichtung (100) nach einem der Ansprüche 1 bis 18, **dadurch gekennzeichnet, dass** das Entnahmegefäss (110, 110') mindestens einen in einer Ebene orthogonal zur Drehachse der Verschlusswelle (132) zumindest teilweise umlaufenden Bund (118) aufweist, an dessen Randbereich mindestens ein in Lastrichtung weisender erster Vorsprung (117) ausgebildet ist.

20. Dosiervorrichtung (100) nach Anspruch 19, **dadurch gekennzeichnet, dass** der mindestens eine Bund (118) und der mindestens eine Vorsprung (117) konzentrisch zur Verschlusswelle (132) ausgebildet sind.

21. Dosiervorrichtung (100) nach Anspruch 19 oder 20, **dadurch gekennzeichnet, dass** eine Beschickungsvorrichtung (300) vorhanden ist, welche mindestens eine in ihrer Ausgestaltung mit dem Bund (118) und dem ersten Vorsprung (117) formschlüssig korrespondierende Aufnahme (302) aufweist und an der Aufnahme (302) mindestens eine Auflage (304) und mindestens eine Aussparung und/oder ein zweiter Vorsprung (305) ausgebildet ist.

22. Dosiervorrichtung (100) nach Anspruch 21, **dadurch gekennzeichnet, dass** die Beschickungsvorrichtung (300) mindestens einen, der Aufbewahrung mehrerer Entnahmegefässe (110, 110') dienender Mehrfachhalter (400) aufweist.

23. Dosiervorrichtung (100) nach Anspruch 22, **dadurch gekennzeichnet, dass** die Beschickungsvorrichtung (300) mit der Antriebsvorrichtung (150) über ein Kommunikationsmittel verbunden ist und in der Beschickungsvorrichtung (300) und/oder in der Antriebsvorrichtung (150) mindestens eine, der Speicherung von spezifische Daten der im Mehrfachhalter aufbewahrten Entnahmegefässe dienende Speichereinheit angeordnet ist.

## Claims

1. Dosage-dispensing device (100) for substances in powder- or paste form, comprising a drive device (150) and a source container (110, 110') that can be set into the drive device (150), wherein a dosage-dispensing head (122) with a closure body that can be set into rotation by a drive mechanism and is connected to a closure shaft (132) which is movably constrained in the source container (110, 110') is arranged at the underside of the source container (110, 110') when the latter is in its operating position, wherein the closure shaft (132) has a coupler part (131) in a passage area (130) where it passes through the topside of the source container (110, 110'), said coupler part (131) being configured to be coupled to and uncoupled from a drive shaft (156) of the drive device (150), **characterized in that** the source container (110, 110') comprises a first form element (111) which is designed for form-fitting engagement with a first counterpart element (151) formed on the drive device (150) and serves to precisely position the coupler part (131) in relation to the drive shaft (156) in a plane that is orthogonal to the axis of rotation of the drive shaft (156), and that the source container (110, 110') further comprises a second form element (121) which is designed for form-fitting engagement with a second counterpart element (181, 181') formed on the drive device (150) and which, when in operating position, serves to precisely position the dosage-dispensing head (122) spatially in relation to a target container (200) which is arranged below the dosage-dispensing head (122).

2. Dosage-dispensing device (100) according to claim 1, **characterized in that** the distance of the first counterpart element (151) from the second counterpart element (181, 181') is adjustable and capable of being adapted to the distance of the first form element (111) from the second form element (121).

3. Dosage-dispensing device (100) according to claim 1 or 2, **characterized in that** the distance between the second counterpart element (181) and a fill opening of the target container (200), or if the source container (110, 110') is set in place in the drive device (150), the distance between the dosage-dispensing head and a fill opening of the target container (200), is adjustable.

4. Dosage-dispensing device (100) according to one of the claims 1 to 3, **characterized in that** a force-measuring device (190), in particular a balance, is electrically and/or mechanically connected to the drive device (150).

5. Dosage-dispensing device (100) according to one of the claims 1 to 4, **characterized in that** the source container (110, 110') comprises a tube-shaped middle part (112) with a bottom end where the dosage-dispensing head (122) is releasably and/or monolithically connected and a top end where a cover (113) is releasably and/or monolithically connected, wherein the passage area (131) as well as the first form element (111) are formed on the cover (113) and the second form element (121) is formed on the dosage-dispensing head (122).

6. Dosage-dispensing device (100) according to claim 5, **characterized in that** the tube-shaped middle part (112) has an arbitrarily selectable cross-sectional profile in a plane that is orthogonal to the rotary axis of the closure shaft (132).

7. Dosage-dispensing device (100) according to one of the claims 1 to 6, **characterized in that** the volume of source containers (110, 110') whose cross-section is the same over the entire length is determined by the length of the tube-shaped middle part (112).

8. Dosage-dispensing device (100) according to one of the claims 1 to 7, **characterized in that** the first form element (111) has a tube-shaped configuration and radially surrounds the passage area (130), wherein the outside surface of the form element (111) is of cylindrical or barrel-shaped configuration, wherein on the form element (111) at least the contact locations that touch the first counter part element (151) are arranged on a circle in the plane that extends orthogonal to the rotary axis of the closure shaft (132) and the center of said circle lies on said rotary axis of the closure shaft (132).

9. Dosage-dispensing device (100) according to one of the claims 1 to 8, **characterized in that** the first counterpart element (151) comprises a forked part whose slot width matches the width of the first form element (111) and that a position-defining rest stop for the first form element (111) is formed at the bottom (152) of the slot.

10. Dosage-dispensing device (100) according to one of the claims 1 to 9, **characterized in that** at least one retaining latch (153) acting on the first form element (111) or on the source container (110, 110') is arranged on the first counterpart element (151) or on the drive device (150).

11. Dosage-dispensing device (100) according to one of the claims 1 to 10, **characterized in that** at least one spherical zone is formed on the second form element (121), whose center of the sphere is located on the rotary axis of the closure shaft (132), and that the second counterpart element (181, 181') has a breakthrough or cutout with a narrowing taper in the direction of the load, wherein at least three contact points or contact areas are formed in said breakthrough, which are in contact with the aforementioned spherical zone when the source container (110, 110') is seated in place, whereby the source container (110, 110') can be defined in its spatial position relative to the drive device (150) and to the target container (200).

12. Dosage-dispensing device (100) according to one of the claims 1 to 11, **characterized in that** the first form element (111) and the second form element (121) and/or the source container (110, 110') are configured substantially with rotational symmetry relative to the rotary axis of the closure shaft (132).

13. Dosage-dispensing device (100) according to one of the claims 1 to 12, **characterized in that** the source container (110, 110'), after it is set into the drive device (150), is freely rotatable relative to the rotary axis of the closure shaft (132).

14. Dosage-dispensing device (100) according to one of the claims 1 to 13, **characterized in that** a securing device (170) against rotary displacement with at least one defined detent position is arranged between the drive device (150) and the source container (110, 110').

15. Dosage-dispensing device (100) according to claim 14, **characterized in that** the securing device (170) comprises a spring element serving to protect the drive mechanism (155) from overload.

16. Dosage-dispensing device (100) according to claim 15, **characterized in that** the source container (110, 110') has an identification marking (115) or an identification emitter (116), for example an RFID tag.

17. Dosage-dispensing device (100) according to claim 16, **characterized in that** at least one detent position of the securing device (170) is arranged so that the position of the identification marking (115) or the identification emitter (116) is aligned with the position of an identification reader device (175) which occupies a location that is separate from the source container (110, 110').

18. Dosage-dispensing device (100) according to one of the claims 1 to 17, **characterized in that** the drive device (150) comprises a locking device (160) which serves to secure the source container (110, 110') seated in the dosage-dispensing device (100) against axial displacement relative to the closure shaft (132).

19. Dosage-dispensing device (100) according to one of the claims 1 to 18, **characterized in that** the source container (110, 110') comprises at least one flange (118) extending along at least part of the circumference in a plane that is orthogonal to the rotary axis of the closure shaft (118), wherein at least one first projection (117) facing in the direction of the load is formed in the border area of the flange.

20. Dosage-dispensing device (100) according to claim 19, **characterized in that** the at least one flange (118) and the at least one projection (117) are of a shape that is concentric with the closure shaft (132).

21. Dosage-dispensing device (100) according to claim 19 or 20, **characterized in that** there is a handling device (300) which comprises at least one receiving seat (302) which is configured to provide a form-fitting engagement with the flange (118) and the first projection (117), and that at least one rest surface (304) and at least one recess and/or a second projection (305) are formed on the receiving seat (302).

22. Dosage-dispensing device (100) according to claim 21, **characterized in that** the handling device (300) comprises at least one multi-unit rack (400) serving for the storage of a plurality of source containers (110, 110').

23. Dosage-dispensing device (100) according to claim 22, **characterized in that** the handling device (300) is connected to the drive device (150) through a communication means and that at least one memory unit serving to store specific data of the source containers held in the multi-unit rack is arranged in the handling device (300) and/or in the drive device (150).

## Revendications

1. Dispositif de dosage (100) pour objet à doser sous forme de poudre ou de pâte, comprenant un dispositif d'entraînement (150) et un récipient de prélèvement (110, 110') pouvant être inséré dans le dispositif d'entraînement (150), une tête de dosage (122) avec un corps de fermeture pouvant être entraîné en rotation étant disposé dans la position de service sur le côté inférieur du récipient de prélèvement (110, 110'), lequel corps est relié à un arbre de fermeture (132) logé de façon mobile dans le récipient de prélèvement (110, 110') et lequel arbre de fermeture (132) présente dans la zone d'un point de passage (130) sur le côté supérieur du récipient de prélèvement (110, 110') une partie d'accouplement (131) avec laquelle un arbre d'entraînement (156) du dispositif d'entraînement (150) peut être couplé ou désaccouplé, **caractérisé en ce que** le récipient de prélèvement (110, 110') présente un premier élément formé (111) qui correspond par complémentarité de formes à une pièce inverse (151) réalisée sur le dispositif d'entraînement (150) et sert au positionnement précis de la partie d'accouplement (131) par rapport à l'arbre d'entraînement (156) dans un plan perpendiculairement à l'axe de rotation de l'arbre d'entraînement (156), et **en ce que** le récipient de prélèvement (110, 110') présente un seconde élément formé (121), qui correspond par complémentarité de formes à une seconde pièce inverse (181, 181') réalisée sur le dispositif d'entraînement (150) et sert dans la position de service au positionnement précis dans l'espace de la tête de dosage (122) par rapport à un récipient cible (200) disposé au-dessous de la tête de dosage (122).

2. Dispositif de dosage (100) selon la revendication 1, **caractérisé en ce que** la distance de la première pièce inverse (151) à la seconde pièce inverse (181, 181') est réglable et peut être adaptée à la distance du premier élément formé (111) au second élément formé (121).

3. Dispositif de dosage (100) selon la revendication 1 ou 2, **caractérisé en ce que** la distance entre la seconde pièce inverse (181) et une ouverture de remplissage du récipient cible (200), et/ou, lorsque le récipient de prélèvement (110, 110') est inséré dans le dispositif d'entraînement (150), la distance entre la tête de dosage est une ouverture de remplissage du récipient cible (200) est réglable.

4. Dispositif de dosage (100) selon l'une quelconque des revendications 1 à 3, **caractérisé en ce qu'**un dispositif de mesure de force (190), en particulier une balance, est relié de façon électrique et/ou mécanique au dispositif d'entraînement (150).

5. Dispositif de dosage (100) selon l'une quelconque des revendications 1 à 4, **caractérisé en ce que** le récipient de prélèvement (110, 110') présente une partie centrale (112) de forme tubulaire, avec la partie inférieure et l'extrémité supérieure de laquelle la tête de dosage (122) et un couvercle (113) sont reliés respectivement de façon amovible et/ou monolithe, le point de passage (130) ainsi que le premier élément formé (111) étant réalisés sur le couvercle (113) et le second élément formé (121) sur la tête de dosage (122).

6. Dispositif de dosage (100) selon la revendication 5, **caractérisé en ce que** la partie centrale (112) tubulaire présente une section quelconque perpendiculairement à l'axe de rotation de l'arbre de fermeture (132).

7. Dispositif de dosage (100) selon l'une quelconque des revendications 1 à 6, **caractérisé en ce que** le volume des récipients de prélèvement (110, 110') avec une section sensiblement constante sur leur longueur est déterminé par la longueur de la partie centrale (112) tubulaire.

8. Dispositif de dosage (100) selon l'une quelconque des revendications 1 à 7, **caractérisé en ce que** le premier élément formé (111) est conçu en forme de tube et entoure radialement le point de passage (130), la surface extérieure de l'élément formé (111) étant réalisée de façon cylindrique et/ou en forme de tonneau ou présentant une forme quelconque, au moins les points de passage étant disposés sur l'élément formé (111) avec la première pièce inverse (151) sur un cercle dans le plan perpendiculairement à l'axe de rotation de l'arbre de fermeture (132) et le centre de ce cercle étant situé sur l'axe de rotation de l'arbre de fermeture (132).

9. Dispositif de dosage (100) selon l'une quelconque des revendications 1 à 8, **caractérisé en ce que** la première pièce inverse (151) présente une partie de fourche dont la largeur de fente correspond à la largeur du premier élément formé (111) et dans le fond de fente de laquelle (152) est réalisée une butée pour le premier élément formé (111).

10. Dispositif de dosage (100) selon l'une quelconque des revendications 1 à 9, **caractérisé en ce qu'**au moins un cliquet de retenue (153) agissant sur le premier élément formé (111) ou sur le récipient de prélèvement (110, 110') est disposé sur la première pièce inverse (151) ou sur le dispositif d'entraînement (150).

11. Dispositif de dosage (100) selon l'une quelconque des revendications 1 à 10, **caractérisé en ce que** sur le second élément formé (121) est réalisée au moins une zone sphérique dont le centre de sphère est situé sur l'axe de rotation de l'arbre de fermeture (132), et **en ce que** la seconde pièce inverse (181, 181') présente un percement ou une entaille rétréci(e) dans le sens de charge, dans lequel ou laquelle au moins trois points de contact ou surfaces de contact sont réalisés, lesquelles touchent la zone sphérique lorsque le récipient de prélèvement (110, 110') est inséré, le récipient de prélèvement (110, 110') pouvant être positionné dans l'espace par rapport au dispositif d'entraînement (150) ou au récipient cible (200).

12. Dispositif de dosage (100) selon l'une quelconque des revendications 1 à 11, **caractérisé en ce que** le premier élément formé (111) et le second élément formé (121) et/ou le récipient de prélèvement (110, 110') est conçu sensiblement symétrique en rotation par rapport à l'axe de rotation de l'arbre de fermeture (132).

13. Dispositif de dosage (100) selon l'une quelconque des revendications 1 à 12, **caractérisé en ce que** le récipient de prélèvement (110, 110') inséré dans le dispositif d'entraînement (150) est libre en rotation par rapport à l'axe de rotation de l'arbre de fermeture (132).

14. Dispositif de dosage (100) selon l'une quelconque des revendications 1 à 13, **caractérisé en ce qu'**un blocage en rotation (170) avec au moins une position d'encliquetage définie est disposé entre le dispositif d'entraînement (150) et le récipient de prélèvement (110, 110').

15. Dispositif de dosage (100) selon la revendication 14, **caractérisé en ce que** le blocage en rotation (170) présente un élément de ressort servant à la sécurité de surcharge de l'entraînement (155).

16. Dispositif de dosage (100) selon la revendication 15, **caractérisé en ce que** le récipient de prélèvement (110, 110') présente un marquage d'identification (115) ou un émetteur d'identification (116), par exemple un tag RFID.

17. Dispositif de dosage (100) selon la revendication 16, **caractérisé en ce qu'**au moins une position d'encliquetage du blocage en rotation (170) est orientée par rapport aux positions du marquage d'identification (115) ou à l'émetteur d'identification (116) et par rapport à la position d'un dispositif de lecture d'identification (175) disposé séparément du récipient de prélèvement (110, 110').

18. Dispositif de dosage (100) selon l'une quelconque des revendications 1 à 17, **caractérisé en ce que** le dispositif d'entraînement (150) présente un dispositif de verrouillage (160) servant au blocage du récipient de prélèvement (110, 110') inséré dans le dispositif de dosage (100) contre des déplacements axiaux par rapport à l'axe de rotation de l'arbre de fermeture (132).

19. Dispositif de dosage (100) selon l'une quelconque des revendications 1 à 18, **caractérisé en ce que** le récipient de prélèvement (110, 110') présente au moins une collerette (118) au moins en partie périphérique dans un plan perpendiculairement à l'axe de rotation de l'arbre de fermeture (132), collerette sur la zone périphérique de laquelle est réalisée au moins une première saillie (117) dirigée dans le sens de charge.

20. Dispositif de dosage (100) selon la revendication 19, **caractérisé en ce que** la au moins une collerette (118) et la au moins une saillie (117) sont réalisées de façon concentrique par rapport à l'arbre de fermeture (132).

21. Dispositif de dosage (100) selon la revendication 19 ou 20, **caractérisé en ce qu'**il existe un dispositif d'alimentation (300), qui présente au moins un logement (302) correspondant par complémentarité de formes dans sa conception à la collerette (118) et à la première saillie (117) et au moins un support (304) et au moins un évidement et/ou au moins une seconde saillie (305) sont réalisés sur le logement (302).

22. Dispositif de dosage (100) selon la revendication 21, **caractérisé en ce que** le dispositif d'alimentation (300) présente au moins un support multiple (400) servant à la conservation de plusieurs récipients de prélèvement (110, 110').

23. Dispositif de dosage (100) selon la revendication 22, **caractérisé en ce que** le dispositif d'alimentation (300) est relié au dispositif d'entraînement (150) par un moyen de communication et au moins une mémoire servant au stockage de données spécifiques des récipients de prélèvement conservés dans le support multiple est disposée dans le dispositif d'alimentation (300) et/ou dans le dispositif d'entraînement (150).
